# FASCICULE DE BREVET EUROPEEN

(11) **EP 2 618 681 B1**
(45) Date de publication et mention de la délivrance du brevet: **25.05.2016**
(21) Numéro de dépôt: 11757651.2
(22) Date de dépôt: 20.09.2011
(51) Int. Cl.: A23L 5/20, A23L 29/00, A23L 31/00, A23L 33/10, A23L 2/04

(54) **EXTRAIT VEGETAL UTILISE COMME SUBSTITUT DE SEL ET EXHAUSTEUR DE GOUT**
PFLANZENEXTRAKT ALS SALZERSATZ UND ALS GESCHMACKSVERBESSERER
PLANT EXTRACT USED AS A SALT SUBSTITUTE AND AS A FLAVOR ENHANCER

(30) Priorité: 20.09.2010 FR 1057495
(43) Date de publication de la demande: 31.07.2013
(73) Titulaire: Diana Naturals, 35560 Antrain (FR)
(72) Inventeur: GARNIER, Jean-Claude, F-35610 Sougeal (FR); VOULAND, Eric, F-56370 Sarzeau (FR); BERGER, Céline, F-35830 Betton (FR)
(74) Mandataire: Regimbeau
(86) Numéro de dépôt international: PCT/EP2011/066257
(87) Numéro de publication internationale: WO 2012/038386

(56) Documents cités:
- WO-A1-2008/040611
- WO-A1-2008/122138
- WO-A2-2008/078315
- WO-A2-2009/152627
- DD-A5- 295 191
- DD-A5- 295 664
- DE-C1- 4 313 549
- GB-A- 1 459 313
- DATABASE WPI Week 200870 Thomson Scientific, London, GB; AN 2008-L86800 XP002613754, & CN 101 095 492 A (ZHANG C) 2 janvier 2008 (2008-01-02) cité dans la demande

## Description

### DOMAINE TECHNIQUE DE L'INVENTION

La présente invention se situe dans le domaine des substituts de sel et exhausteurs de goût d'origine naturelle. En effet, la présente invention concerne un procédé de préparation d'un extrait de betterave comprenant une étape d'obtention de jus de tout ou partie de la plante, une étape d'hydrolyse enzymatique des protéines, et une étape d'enrichissement des composés de faible masse moléculaire. L'invention concerne également l'extrait susceptible d'être ainsi obtenu, des compositions comprenant l'extrait et un autre extrait végétal ou carné, ainsi que leurs utilisations dans des préparations culinaires, afin de réduire la teneur en sel ou en glutamate monosodique.

### ART ANTERIEUR

Réduire la quantité de sel (chlorure de sodium NaCl) utilisé dans les formulations alimentaires fait partie des objectifs majeurs que se sont fixées les autorités de santé publique. En effet, le développement de pathologies liées à une consommation excessive de l'élément sodium est largement reconnu. L'impact que joue l'ion sodium sur l'augmentation de l'hypertension artérielle et, par voie de conséquence, sur la genèse de maladies cardiovasculaires, a largement été démontré. Par ailleurs, le sel, quand il est consommé à fortes doses, serait impliqué dans le développement de diverses maladies (maladies rénales, certaines formes de cancers, ostéoporose, asthme, obésité...). Les effets néfastes du sel sont principalement dus à l'ion sodium.

Globalement, la consommation actuelle de sel par personne et par jour s'élève à 9-12 g tandis que l'Organisation Mondiale de la Santé vise une consommation inférieure à 5 g. Certaines denrées sont plus particulièrement ciblées par cette mesure de réduction de sel, en tant que principales contributrices à l'apport de sel dans l'alimentation : soupes, sauces, snacks, plats préparés, entre autres, en font partie.

Le goût salé est cependant largement apprécié des consommateurs. De plus, il permet d'augmenter l'intensité aromatique des autres saveurs. Ainsi, les soupes, sauces, snacks et plats préparés à teneur réduite en sel et dépourvus de tout autre ingrédient permettant d'augmenter la saveur salée et/ou jouant un rôle d'exhausteur de goût sur les autres saveurs, notamment la saveur umami, sont généralement considérés comme fades par les consommateurs et donc laissés de côté.

Néanmoins, il est nécessaire de réduire la consommation en sel de la population. D'un point de vue plus pratique, l'objectif est de réduire de 25 % l'apport de sel dans les recettes de ce type de denrées alimentaires. Une soupe du commerce contenant en moyenne 0,8 % de sel, il s'agirait, en apportant un autre ingrédient, de parvenir à formuler la recette avec 0,6 % de sel sans pour autant perdre les caractéristiques organoleptiques de la soupe.

Différents types de substituts de sel ont été proposés jusqu'ici. Il a tout d'abord été proposé de remplacer l'ion sodium du sel de cuisine (Na+) par l'ion potassium (K+) et de remplacer une partie du sel de cuisine (NaCl) par un sel de potassium et notamment le chlorure de potassium (KCl).

Le problème des substituts de sel à base de KCl est que si le KCl permet effectivement d'augmenter la saveur salée, il introduit également dans la préparation culinaire une amertume que ne possède pas le sel de cuisine et dont le goût est généralement jugé déplaisant par les consommateurs.

Différents produits ont alors été proposés pour masquer l'amertume du KCI. Par exemple, il a été proposé de rajouter de la taurine, des 5'-nucléotides ou un mélange de taurine et de 5'-nucléotides (WO 2007/002015), du tréhalose (WO 2008097842) ou des levures entières dénaturées (WO 2009/116050).

Cependant, la détermination des proportions relatives des différents ingrédients pour conserver une saveur salée suffisante tout en limitant suffisamment l'amertume est difficile. En particulier, il est difficile d'obtenir de cette façon un goût global équilibré de la préparation.

En effet, la saveur salée n'est pas la seule saveur d'intérêt et le fait pour un produit d'être considéré par le consommateur comme ayant « bon goût » ne dépend pas seulement de sa saveur salée, mais aussi de l'équilibre général du goût et donc des autres types de saveurs.

Parmi les autres types de saveurs se trouve la saveur «umami », qui est particulièrement appréciée par certains consommateurs. Cette saveur peut être obtenue artificiellement par l'ajout de glutamate monosodique (généralement appelé MSG). Toutefois, malgré plusieurs études montrant une absence d'effet du MSG en cas d'ingestion avec de la nourriture, le MSG a conservé la réputation d'induire des effets secondaires chez les sujets ingérant de la nourriture dans laquelle du MSG a été ajouté, et il est donc préférable d'éviter l'ajout de MSG dans des préparations culinaires afin d'augmenter la saveur umami.

Un autre problème des substituts de sel à base de KCl, avec ou sans autre ingrédient destiné à masquer l'amertume, est que les consommateurs sont aujourd'hui également préoccupés par le fait d'éviter autant que possible les produits chimiques de synthèse et cherchent à favoriser la consommation de produits d'origine naturelle.

Différents extraits animaux ou végétaux ont été proposés comme substituts de sel.

Par exemple, la demande de brevet WO 2008/122138 décrit un produit à base de pois, ayant la capacité à diminuer la quantité de sel dans les aliments de par la perception salée qu'il confère à ces denrées. Le produit de l'invention est fabriqué selon un procédé faisant intervenir une étape d'hydrolyse protéolytique ainsi qu'une étape de fermentation par des lactobacilles.

WO 2009/114954 et WO 2009/152627 décrivent quant à eux des produits fabriqués à partir de céleri et d'épinard, respectivement, et dont le procédé comprend notamment une étape d'hydrolyse enzymatique, une étape optionnelle de fermentation et une étape optionnelle de filtration. Ces produits sont utilisés pour augmenter la perception de salinité dans les aliments.

La demande WO 2009/104194 décrit une méthode pour la réduction de la quantité de sel dans les produits alimentaires par ajout de solides de tomate solubles obtenus à partir de sérum de tomate. Une étape d'hydrolyse des protéines est incluse au procédé d'obtention du produit.

WO 2008/078315 décrit un extrait de tomate décoloré qui ne présente plus ni le goût ni l'odeur caractéristique de la tomate et efficace pour substituer le sel dans les denrées alimentaires.

WO 2008/040611 décrit le procédé d'obtention d'un extrait de tomate fractionné presque incolore, sans odeur et sans goût de la tomate, par une succession d'étapes comprenant une séparation du sérum et de la pulpe de tomate, une étape d'hydrolyse des protéines et une étape de nanofiltration permettant tout particulièrement d'éliminer les substances jugées non désirables (composés odorants, colorés...).

Plusieurs procédés d'obtention d'extraits de betterave ont également été décrits dans l'art antérieur. Cependant, aucun de ces procédés ne prévoit le traitement de jus de betterave par une étape d'hydrolyse enzymatique des protéines et une étape d'enrichissement des composés ayant une masse moléculaire inférieure à 5000 Da.

Ainsi, DD295664A5 concerne un procédé de filtration d'extraits de betterave sucrière permettant de séparer le jus de la pulpe, avant des traitements ultérieurs non précisés. Aucune étape d'hydrolyse des protéines n'est mentionnée, ni aucune étape d'enrichissement en composés de masse moléculaire inférieure à 5000 Da.

De même, DD295191A5 s'intéresse à la concentration d'un extrait de betterave, afin d'obtenir un concentré de stockage. Aucune étape d'hydrolyse des protéines n'est mentionnée, ni aucune étape d'enrichissement en composés de masse moléculaire inférieure à 5000 Da.

DE4313549C1 concerne un procédé de préparation de pectines à partir de betterave. Les pectines sont des polyosides présents dans les parois végétales (la pulpe donc), et qui peuvent donc être obtenus à partir de la pulpe de betterave (qui fait toujours partie du matériau de départ utilisé dans DE4313549C1). Dans ce but, la cellulose dont est faite la pulpe doit être hydrolysée pour libérer les pectines. Le procédé de préparation de pectines décrit dans DE4313549C1 comprend donc une étape d'hydrolyse (acide et non enzymatique) de pulpe de betterave. Cependant, cette étape n'est pas une étape d'hydrolyse des protéines, mais une étape d'hydrolyse de la cellulose présente dans la pulpe. Aucune étape d'enrichissement en composés de masse moléculaire inférieure à 5000 Da n'est mentionnée.

GB1459313A concerne la préparation de compositions alimentaires contenant du sucre, par un procédé comprenant l'évaporation d'un extrait aqueux de betterave sucrière, éventuellement après avoir ôté les protéines, puis l'incorporation du sirop obtenu dans la composition alimentaire. Aucune étape d'hydrolyse des protéines n'est mentionnée, ni aucune étape d'enrichissement en composés de masse moléculaire inférieure à 5000 Da.

CN101095492A décrit l'obtention d'un extrait de betterave par déshydratation au soleil puis sous vide de purée ou de jus de betterave. Aucune étape d'hydrolyse des protéines n'est mentionnée, ni aucune étape d'enrichissement en composés de masse moléculaire inférieure à 5000 Da.

Les extraits de betterave ainsi obtenus dans l'art antérieur soit ne comprennent pas de fraction protéique (voir notamment GB 1459313A, qui prévoit page 1, colonne de gauche, lignes 39-40, la possibilité d'enlever les protéines), soit comprennent une fraction protéique non hydrolysée. De tels extraits ne peuvent pas être utilisés comme substitut de sel ou pour augmenter la saveur umami d'une préparation alimentaire. De telles utilisations ne sont d'ailleurs mentionnées dans aucun des documents mentionnés ci-dessus.

Cependant, les procédés utilisés et par conséquent les produits obtenus dans ces documents sont différents de ceux de la présente invention (les différences sont discutées au fil du texte). De plus, aucun de ces extraits végétaux n'est décrit comme permettant à la fois d'augmenter la saveur salée et la saveur umami tout en réduisant l'apport en sodium, et également d'augmenter l'intensité aromatique globale d'une préparation culinaire de façon équilibrée, conduisant ainsi à un goût satisfaisant pour le consommateur.

Il existe donc un réel besoin de substitut de sel comprenant des composés naturels permettant de compenser l'absence du NaCl normalement ajouté aux formulations alimentaires, en augmentant l'impression de salinité, en restaurant la diversité et la force des arômes manquant aux recettes peu salées, et en renforçant les arômes naturellement présents dans le produit.

Les inventeurs de la présente demande ont découvert qu'un extrait de betterave, susceptible d'être obtenu par un procédé dont les deux étapes essentielles sont une hydrolyse enzymatique des protéines et une étape d'enrichissement en composés de faible masse moléculaire, permet, lorsqu'il est utilisé comme substitut d'une partie du sel ajouté dans une préparation culinaire, de conserver la saveur salée de la préparation, mais également d'augmenter la saveur umami et l'intensité aromatique globale de la préparation. De plus, lorsque cet extrait est combiné à un autre extrait végétal (extrait de légume, notamment choisi parmi un extrait de tomate, de carotte ou d'oignon) ou carné (extrait de poulet notamment), un effet synergique est observé qui permet d'obtenir des saveurs à la fois suffisantes et équilibrées, aspects essentiels pour l'obtention d'un « bon goût » pour le consommateur.

### DESCRIPTION DE L'INVENTION

La présente invention concerne donc un procédé de préparation d'un extrait de betterave, comprenant :
(a) l'obtention d'un jus de betterave à partir de tout ou partie de la plante,
(b) une étape d'hydrolyse enzymatique des protéines du jus obtenu à l'étape (a),
(c) une étape d'enrichissement en composés de faible masse moléculaire (masse moléculaire inférieure à 5000 daltons (Da), avantageusement inférieure à 1000 Da, inférieure à 900 Da, inférieure à 800 Da, inférieure à 700 Da, inférieure à 600 Da, inférieure à 500 Da.

L'extrait selon l'invention est un extrait de betterave. La betterave, de nom scientifique *Beta vulgaris,* appartient à la famille des Chénopodiacées. Il existe trois types de betteraves :
- la betterave sucrière, riche en saccharose;
- la betterave fourragère ;
- la betterave potagère, également appelée *betterave rouge, carotte rouge* ou *racine rouge.*

L'extrait selon l'invention est avantageusement obtenu à partir de betterave potagère.

Différentes variétés de betterave potagère sont disponibles et peuvent être utilisées dans le cadre de la présente invention. Ainsi, des exemples de variétés utilisables incluent les variétés Albina Vereduna, Chioggia, Burpee's Golden, De Détroit 2 (Globe).

Concernant la partie de la plante utilisée, celle-ci peut être choisie parmi le tubercule, la tige, les feuilles, les fleurs ou leurs mélanges. Ainsi dans un mode de réalisation, l'extrait est obtenu à partir de tubercule de betterave, de préférence potagère. Dans un autre mode de réalisation, l'extrait est obtenu à partir de tige de betterave, de préférence potagère. Dans encore un autre mode de réalisation, l'extrait est obtenu à partir de feuilles de betterave, de préférence potagère. Dans encore un autre mode de réalisation, l'extrait est obtenu à partir de tige et de feuilles de betterave, de préférence potagère. Dans encore un autre mode de réalisation, l'extrait est obtenu à partir de fleurs de betterave, de préférence potagère. Enfin, dans un autre mode de réalisation, l'extrait est obtenu à partir d'une plante complète de betterave, de préférence potagère. Du fait des différences initiales dans la composition des différentes parties ou mélanges de parties de betterave, les extrait obtenus à partir de ces différentes parties ou mélanges ne sont bien sûr pas strictement identiques.

La 1^{ère} étape (a) du procédé selon l'invention vise simplement à obtenir un jus de betterave à partir du matériau de départ constitué de tout ou partie de la plante, comme décrit ci-dessus, et peut être réalisée par toute méthode conventionnelle bien connue de l'homme du métier. Par exemple, un procédé comprenant une étape de broyage, une étape de blanchiment, une étape de pressage et une étape de filtration grossière pourra être mis en oeuvre pour obtenir le jus de betterave.

L'étape de blanchiment, notamment destinée à inhiber les enzymes endogènes, est une étape indispensable à l'industrialisation du produit et constitue en ce sens une voie d'amélioration aux procédés décrits dans WO 2009/152627 ou dans WO 2009/114954 réalisés à une échelle de laboratoire. Notamment dans le cas où le broyat ne pourrait être traité rapidement dans l'étape ultérieure (pressage), ce qui est souvent le cas à l'échelle industrielle, le blanchiment permet de limiter le brunissement enzymatique de la matière et l'apparition de goûts indésirables qui pourraient remettre en cause son utilisation en tant que substitut de sel et exhausteur de goût (à l'échelle du laboratoire, de tels problèmes ne se posent pas compte tenu de la possibilité de réalisation du procédé en un court délai).

De plus, des étapes optionnelles, antérieures à l'étape (a), peuvent être présentes si nécessaire. Ainsi, le matériau de départ (tout ou partie de la betterave comme décrit ci-dessus) peut être si nécessaire lavé et/ou épierré.

Egalement, une étape de préconcentration du jus obtenu, postérieure à l'étape (a) et antérieure à l'étape (b) peut être présente.

L'étape (b) du procédé selon l'invention est une étape d'hydrolyse enzymatique des protéines du jus obtenu à l'étape (a). Celle-ci permet de libérer les acides aminés présents dans les protéines de betterave et de favoriser la génération des saveurs associées à ces acides aminés. En particulier, cette étape permet de libérer l'acide glutamique présent dans les protéines de betterave et responsable, parmi d'autres composés aromatiques, de la saveur « umami » de l'extrait selon l'invention.

Dans un mode de réalisation avantageux, l'étape d'hydrolyse est réalisée à l'aide d'au moins une composition enzymatique comprenant une activité exopeptidase, une activité endopeptidase et une activité glutaminase. Par « activité exopeptidase », on entend l'activité d'hydrolyse des liaisons peptidiques à l'extrémité des chaînes, c'est-à-dire l'activité de clivage des acides aminés situés à l'extrémité des protéines. Par « activité endopeptidase» on entend l'activité d'hydrolyse des liaisons peptidiques à l'intérieur des chaines, c'est-à-dire l'activité de clivage des protéines au niveau d'acides aminés situés à l'intérieur de la protéine. Par « activité glutaminase », on entend le fait d'hydrolyser la glutamine en glutamate et un ion ammonium.

Les activités exopeptidase et endopeptidase peuvent être obtenues soit par utilisation combinée d'une exopeptidase et d'une endopeptidase, soit par utilisation d'une peptidase (ou protéase) à large spectre ayant les deux activités. Des exemples d'enzymes ayant une activité exopeptidase comprennent Promod™ 194P (Biocatalysts). Des exemples d'enzymes ou de préparation enzymatique ayant une activité endopeptidase comprennent Promod™ 439L (Biocatalysts), Alcalase® 2.4L (Novozymes), Gammaprotéase RFG660L (AB Enzymes), Protamex TL (Novozymes). Des exemples de protéases à large spectre ou de préparations commerciales ayant les deux activités exopeptidase et endopeptidase comprennent Promod™ 24L (Biocatalysts), Endozym® Protéase NP (Spindal), Flavourzyme® 1000L (Novozymes), Prolyve NP CONC (Lyven). Tout type de glutaminase ou de préparation à activité glutaminase peut être utilisé, par exemple Glutaminase Daiwa SD-C100S (Amano) et Flavorpro™ 373P (Biocatalysts). Bien qu'on utilise généralement une seule enzyme de chaque type, des mélanges de chaque type d'enzyme peuvent bien entendu être utilisés.

Les différentes enzymes mises en oeuvre peuvent être utilisées de façon simultanée ou bien de façon séquentielle. Notamment, les différentes activités enzymatiques (exopeptidase/endopeptidase/glutaminase) peuvent se manifester dans le jus de façon simultanée ou séquentielle. La ou les glutaminases hydrolysent les résidus glutamine en glutamate. Par conséquent, la ou les glutaminases sont de préférence ajoutées soit simultanément avec la ou les enzymes ayant les activités exopeptidase et endopeptidase, soit après l'action de cette ou ces enzymes.

Les différentes enzymes sont utilisées de façon conventionnelle, conformément aux instructions du fabricant. Par exemple, elles peuvent être utilisées à une température de 40°C à 80°C, avantageusement de 40 à 70 °C, de 45 à 65 °C, ou de 50 à 60°C, pendant une durée de 10 minutes à 5 heures, de préférence 15 minutes à 3 heures, en une quantité de 0,5 à 5 g d'enzyme pour 100 g de protéines, avantageusement de 0,75 à 3 g d'enzyme pour 100 g de protéines.

L'étape (c) du procédé selon l'invention est une étape d'enrichissement en composés de faible masse moléculaire, c'est-à-dire de masse moléculaire inférieure à 5000 daltons (Da), avantageusement inférieure à 1000 Da, inférieure à 900 Da, inférieure à 800 Da, inférieure à 700 Da, inférieure à 600 Da, inférieure à 500 Da. Par « enrichissement », on entend une augmentation de 10-30 % du pourcentage de composés de l'extrait obtenu ayant une masse moléculaire inférieure à 5000 daltons (Da), avantageusement inférieure à 1000 Da, inférieure à 900 Da, inférieure à 800 Da, inférieure à 700 Da, inférieure à 600 Da, inférieure à 500 Da. Le pourcentage d'augmentation est calculé de la façon suivante :
% augmentation = (% de composés ayant une masse moléculaire inférieure à la valeur choisie après l'étape d'enrichissement - % de composés ayant une masse moléculaire inférieure à la valeur choisie avant l'étape d'enrichissement) / (% de composés ayant une masse moléculaire inférieure à la valeur choisie avant l'étape d'enrichissement).Cette étape peut être réalisée par toute technologie permettant de concentrer les composés de faible poids moléculaire ou d'exclure les composés de poids moléculaire supérieur connue de l'homme du métier. Notamment, l'étape d'enrichissement peut être réalisée par microfiltration, ultrafiltration ou nanofiltration.

Dans certaines demandes (WO 2008/122138 et WO 2009/152627) la notion de filtration est évoquée mais pas celle de microfiltration, ultrafiltration ou de nanofiltration. Or la microfiltration, l'ultrafiltration et la nanofiltration se distinguent parfaitement de la filtration classique en ce qu'une alimentation tangentielle à la surface de la membrane est mise en oeuvre, de manière à sélectionner préférentiellement certains types de molécules (en fonction de leur nature et de leur taille) et à limiter le colmatage. Cela permet notamment dans le procédé selon l'invention de concentrer l'acide glutamique précédemment libéré par l'hydrolyse enzymatique des protéines. Sur le plan organoleptique, l'extrait de betterave obtenu suite à l'étape (c) et dilué dans l'eau à 2°Brix est perçu comme étant entre 1,25 et 1,75 fois plus salé et de 4 à 5 fois plus umami que ce même extrait dilué au même degré Brix avant l'étape (c).

Dans les demandes WO 2008/122138 et WO 2009/152627, l'étape de filtration, qualifiée d'optionnelle, est surtout destinée à éliminer les grosses particules (possiblement la biomasse issue de l'étape de fermentation et les protéines non digérées) plutôt qu'à récupérer des composés d'intérêt comme des ions ou des acides aminés. Dans WO 2008/078315, la notion de filtration fine est évoquée, mais elle contribue davantage à l'élimination des particules non désirables (pigments de la tomate et autres molécules contribuant à la couleur, molécules participant au goût typique de la tomate, acidité de la matière première) qu'à la concentration des molécules d'intérêt comme c'est le cas dans la présente invention, qui met en avant l'intérêt de l'étape (c) pour la sélection préférentielle de certaines molécules, dont l'acide glutamique. La nanofiltration décrite dans WO 2008/040611 est clé pour l'élimination de pigments, d'acides organiques et de sucres, et éventuellement de molécules aromatiques caractéristiques de la tomate. La présente invention revendique davantage la mise en oeuvre du procédé décrit pour conserver les molécules aromatiques et les composés sapides qui contribuent aux propriétés de réduction de sel et à l'effet exhausteur de goût décrits.

L'intérêt de l'étape (c), en combinaison avec les étapes qui la précédent, peut être illustrée ci-après : considérant un extrait de betterave de 40°Brix environ, la teneur en acide glutamique passe de 0,12 à 0,24 % sans traitement spécifique à 0,40 à 0,60 % après application du procédé décrit dans l'invention, incluant l'étape (b) d'enzymage (libération de l'acide aminé) et l'étape (c) d'enrichissement en composés de faible poids moléculaire (concentration de l'acide aminé), ce qui correspond à un facteur de concentration moyen de l'acide aminé de 2 à 3. Or l'acide glutamique participe aux propriétés de l'extrait de betterave notamment de par la saveur umami qu'il apporte. De la même façon, un effet de concentration de l'ion potassium peut être observé au moyen du procédé décrit dans la présente invention. Or cet ion contribue à compenser une réduction de chlorure de sodium dans une application alimentaire, notamment de par la saveur salée qu'il procure. En outre, l'étape (c) permet à elle seule un enrichissement de 10 à 30 % de l'extrait en composés de masse moléculaire inférieure à 5000 Da, avantageusement inférieure à 1000 Da, inférieure à 900 Da, inférieure à 800 Da, inférieure à 700 Da, inférieure à 600 Da, inférieure à 500 Da. Plus globalement, le procédé de l'invention permet de récupérer tout un ensemble de molécules d'intérêt puis de les concentrer, de sorte à former un pool de molécules contribuant au renforcement de l'intensité aromatique, à l'effet de réduction de sel et à l'effet exhausteur de goût de l'extrait de betterave.

L'analyse de l'art antérieur met en évidence d'autres procédés qui pourraient être considérées comme proches du procédé selon l'invention, mais qui s'en distinguent en ce qu'aucune étape d'hydrolyse et/ou d'enrichissement en composés de faible poids moléculaire n'est présente. Par exemple, WO 2009/104194 ne fait référence ni à de l'enzymage ni à de l'ultrafiltration. De même, WO 2008/078315 ne fait intervenir aucune étape d'hydrolyse dans le but de libérer les acides aminés, seul un procédé enzymatique optionnel et mis en oeuvre dans le but de réduire la teneur en sucre étant mentionné. La présente invention souligne au contraire l'intérêt de combiner les étapes ici décrites, dans le but de favoriser la récupération et la concentration du pool de molécules jouant un rôle clé dans les propriétés de réduction de sel et d'exhausteur de goût.

D'autres étapes optionnelles peuvent être présentes dans le procédé selon l'invention. Par exemple, une étape de pasteurisation ou stérilisation de l'extrait peut être présente, à un ou plusieurs stades du procédé, comme par exemple entre l'étape (a) et l'étape (b) et/ou à la fin du procédé.

Des étapes de concentration de l'extrait, par exemple réalisées par concentration sous vide ou par évaporation, peuvent également être présentes. En particulier, l'extrait de betterave liquide selon l'invention est de préférence concentré de façon à obtenir un extrait liquide possédant un degré Brix compris entre 20 et 70°Brix. Cet extrait concentré peut alors être utilisé dans les applications décrites dans la présente description. Le degré Brix d'un extrait liquide de betterave selon l'invention peut être mesuré par réfractométrie.

Une étape de décoloration de l'extrait, par exemple sur charbon actif ou par ajout de diatomite ou de cellulose, peut également être présente.

Enfin, une étape de séchage de l'extrait, par exemple par atomisation, par séchage sur rouleau ou par lyophilisation, peut aussi être présente, de façon à obtenir non pas un extrait liquide ou pâteux, mais un extrait sec. En effet, selon la préparation culinaire à laquelle l'extrait est susceptible d'être ajouté, un extrait liquide ou solide peut être plus approprié. Par exemple, pour une sauce ou une soupe liquide, un extrait liquide peut être plus commode. Au contraire, pour une soupe lyophilisée, un extrait sec est nécessaire. Toutes les étapes optionnelles décrites ci-dessus sont des étapes classiques, que l'homme du métier sait mettre en oeuvre sans difficulté particulière.

Dans certains cas, des extraits appelés « extraits de légumes » ont été décrits, dans lesquels l'extrait de légume proprement dit est combiné avec du sel de cuisine. Ce n'est pas le cas de l'extrait de betterave selon l'invention, le procédé ne comprenant pas d'étape d'ajout de sel de cuisine dans le jus de betterave.

La présente invention concerne également un extrait de betterave susceptible d'être obtenu par le procédé selon l'invention tel que décrit précédemment. En effet, un tel extrait de betterave comprend des propriétés gustatives particulièrement intéressantes. Notamment, un tel extrait permet, malgré une teneur limitée en sodium, d'augmenter la saveur salée d'une préparation culinaire comprenant une teneur réduite en sel de cuisine et donc une teneur réduite en sodium. En effet, la teneur en sodium d'une quantité donnée de l'extrait selon l'invention est très inférieure à celle d'une quantité équivalente de sel de cuisine, et le remplacement d'une quantité donnée de sel de cuisine par l'extrait selon l'invention conduit donc à une réduction importante de la teneur globale en sodium, tout en permettant de conserver en grande partie la saveur salée. Un tel extrait permet également d'augmenter la saveur umami d'une préparation culinaire. Enfin, l'extrait selon l'invention permet d'augmenter de façon générale l'intensité aromatique d'une préparation culinaire le comprenant, tout en maintenant un goût global équilibré, apprécié par le consommateur. Cela est notamment permis par la présence de nombreux composés aromatiques présents dans l'extrait, qui contribuent dans leur ensemble à l'obtention d'un goût équilibré. Par « composé aromatique », on entend dans la présente description tout composé possédant en tant que tel une saveur (salée, sucrée, acide, amère, umami). Au total, l'extrait de betterave selon l'invention permet de réduire la quantité de sodium présent dans une préparation culinaire tout en conservant une saveur salée suffisante et en renforçant la saveur umami et l'intensité aromatique globale de la préparation.

Une analyse de l'extrait selon l'invention montre qu'il contient :
- Cendres (fraction minérale) : 12 à 15 g pour 100 g d'extrait à 40°Brix environ,
- Sucres totaux (fraction glucidique) : 6 à 10 g pour 100 g d'extrait à 40°Brix environ,
- Protéines (fraction protéique) : 6 à 10 g pour 100 g d'extrait à 40°Brix environ,
- Lipides (fraction lipidique) : 0 à 1,5 g pour 100 g d'extrait à 40°Brix environ,
- Potassium (élément de la fraction minérale) : 1500 à 7000 mg pour 100 g d'extrait à 40°Brix environ, notamment 1500 à 6500 mg pour 100 g d'extrait à 40°Brix environ, 1500 à 6000 mg pour 100 g d'extrait à 40°Brix environ, 1500 à 5500 mg pour 100 g d'extrait à 40°Brix environ, 1500 à 5000 mg pour 100 g d'extrait à 40°Brix environ, 1500 à 4500 mg pour 100 g d'extrait à 40°Brix environ, 1500 à 4000 mg pour 100 g d'extrait à 40°Brix environ, voire 1500 à 3500 mg pour 100 g d'extrait à 40°Brix environ, ou 2000 à 7000 mg pour 100 g d'extrait à 40°Brix environ, 2000 à 6500 mg pour 100 g d'extrait à 40°Brix environ, 2000 à 6000 mg pour 100 g d'extrait à 40°Brix environ, 2000 à 5500 mg pour 100 g d'extrait à 40°Brix environ, 2000 à 5000 mg pour 100 g d'extrait à 40°Brix environ, 2000 à 4500 mg pour 100 g d'extrait à 40°Brix environ, 2000 à 4000 mg pour 100 g d'extrait à 40°Brix environ, 2000 à 3500 mg pour 100 g d'extrait à 40°Brix environ, ou 2500 à 7000 mg pour 100 g d'extrait à 40°Brix environ, 2500 à 6500 mg pour 100 g d'extrait à 40°Brix environ, 2500 à 6000 mg pour 100 g d'extrait à 40°Brix environ, 2500 à 5500 mg pour 100 g d'extrait à 40°Brix environ, 2500 à 5000 mg pour 100 g d'extrait à 40°Brix environ, 2500 à 4500 mg pour 100 g d'extrait à 40°Brix environ, 2500 à 4000 mg pour 100 g d'extrait à 40°Brix environ, 2500 à 3500 mg pour 100 g d'extrait à 40°Brix environ,
- Sodium (élément de la fraction minérale) : 2500 à 4500 mg pour 100 g d'extrait à 40°Brix environ,
- Acide glutamique (élément à rapprocher de la fraction protéique) : 0,4 à 0,8 g pour 100 g d'extrait à 40°Brix environ.

De plus, au moins 80 %, au moins 85 %, au moins 90 %, au moins 91 %, au moins 92 %, au moins 93 %, au moins 94 %, ou au moins 95 %, avantageusement au moins 96 %, au moins 97 %, au moins 98 %, voire au moins 99 % des composés ont une masse moléculaire inférieure à 5000 Da, avantageusement inférieure à 1000 Da, inférieure à 900 Da, inférieure à 800 Da, inférieure à 700 Da, inférieure à 600 Da, inférieure à 500 Da. Toutes les combinaisons de pourcentage et de masse moléculaire maximale indiquées dans la phrase précédente font partie de la présente invention. Avantageusement, au moins 80 %, au moins 85 %, au moins 90 %, au moins 91 %, au moins 92 %, au moins 93 %, au moins 94 %, ou au moins 95 %, avantageusement au moins 96 %, au moins 97 %, au moins 98 %, voire au moins 99 % des composés ont une masse moléculaire inférieure à 500 Da.

Le produit sous sa forme concentrée se présente sous la forme d'un liquide odorant (odeur d'épinard, d'artichaut), aromatique (goût très salé, umami, acide, légèrement artichaut/herbes séchées, caramélisé/grillé type seasonning, note extrait de levure, goût viandé), coloré (brun très foncé, opaque). Dilué à 2 %, il présente une couleur caramel, marron-orangé, limpide, une odeur de coeur d'artichaut, d'épinard, légèrement « herbes séchées, foin », et un goût salé, umami, doux, rond. Le produit ne présente pas de faux goût, il est légèrement astringent, pas typé betterave et présente un léger goût artichaut/épinard, assez faible dans l'ensemble.

WO 2008/040611 et WO 2008/078315 revendiquent à l'inverse l'obtention de produits clairs, presque incolores, sans l'odeur ni le goût de la matière végétale utilisée pour leur fabrication, de liquide transparent, décoloré et désaromatisé, ce qui n'est pas le cas de l'extrait de betterave décrit dans la présente invention. En effet, quand bien même l'objectif du procédé de l'invention est de permettre une réduction de sel en impactant le moins possible les propriétés sensorielles caractéristiques de la denrée alimentaire, il y est question d'un produit conservant encore des propriétés aromatiques (présente une odeur et un goût de végétal) et visuelles (présente une coloration), qui sont probablement à rapprocher de l'intensité et de l'équilibre aromatiques globaux des préparations culinaires dans lesquelles une partie du sel de cuisine a été remplacée par l'extrait selon l'invention, contribuant ainsi à l'obtention d'un goût satisfaisant pour le consommateur.

La présente invention concerne également un extrait sec de betterave, obtenu par séchage de l'extrait liquide selon l'invention. En effet, comme indiqué précédemment, une étape de séchage de l'extrait peut également être présente dans le procédé de préparation, de façon à obtenir un extrait sec.

La présente invention concerne également une composition ou un kit comprenant ou constitué d'un extrait de betterave selon l'invention, liquide ou sec, tel que décrit dans l'un quelconque des modes de réalisation de la présente description, et d'au moins un autre extrait végétal ou carné. En effet, les inventeurs de la présente demande ont découvert qu'en combinant l'extrait de betterave avec au moins un autre extrait végétal ou carné, des effets de synergie, au niveau de la saveur salée, de la saveur umami, et de l'intensité aromatique globale, peuvent être observés.

Par « composition », on entend une unique composition comprenant dans un même mélange l'extrait de betterave selon l'invention et au moins un autre extrait végétal ou camé. Par « kit », en revanche, on entend le fait de fournir simultanément, mais séparément (c'est-à-dire dans plusieurs récipients ou compartiments séparés), un extrait de betterave selon l'invention et au moins un autre extrait végétal ou carné. Dans les deux cas, la composition ou les différents éléments du kit peuvent être ajoutés à une même préparation culinaire. La présentation sous forme de kit peut notamment avoir un intérêt si l'extrait de betterave selon l'invention et ledit au moins un autre extrait végétal ou carné sont sous des formes différentes, par exemple l'un sous forme liquide et l'autre sous forme sèche.

Par « extrait végétal », on entend un extrait de tout type de végétaux, tels que les plantes donnant des légumes au sens commun de ce terme, les plantes donnant des fruits au sens commun de ce terme, ou les autres plantes, comme les algues par exemple. De manière avantageuse, ledit au moins un autre extrait est un extrait de légume. En particulier, ledit extrait de légume peut être choisi parmi un extrait de tomate, de carotte, et d'oignon. Bien entendu, un seul de ces extraits ou plusieurs d'entre eux peuvent être ajoutés à l'extrait de betterave selon l'invention. Ainsi, dans un mode de réalisation avantageux, la composition ou le kit selon l'invention comprend un extrait de betterave selon l'invention et un extrait de tomate. Une telle composition, comprenant un extrait de betterave selon l'invention et un extrait de tomate, peut également comprendre de manière optionnelle un extrait de carotte. Des exemples de compositions ou kits avantageux sont ceux comprenant ou constitués, en termes d'extraits végétaux, d'un extrait de betterave selon l'invention tel que décrit dans l'un quelconque des modes de réalisation de la présente description et :
- d'un extrait de tomate,
- d'un extrait de carotte,
- d'un extrait d'oignon,
- d'un extrait de tomate et d'un extrait de carotte,
- d'un extrait de tomate et d'un extrait d'oignon,
- d'un extrait de carotte et d'un extrait d'oignon, et
- d'un extrait de tomate, d'un extrait de carotte et d'un extrait d'oignon.

Les compositions ou kits préférés comprennent ou sont constitués d'un extrait de betterave selon l'invention tel que décrit dans l'un quelconque des modes de réalisation de la présente description et :
- d'un extrait de tomate,
- d'un extrait de carotte, et
- d'un extrait de tomate et d'un extrait de carotte.

Les extraits végétaux susceptibles d'être ajoutés à un extrait de betterave selon l'invention dans une composition ou un kit sont préparés selon différents procédés adaptés à l'obtention d'un extrait de chaque végétal d'intérêt. Ainsi, pour bon nombre de légumes, un procédé comprenant des étapes classiques d'obtention d'un jus ou d'un broyat de légume, d'hydrolyse des pectines à l'aide de pectinases, et diverses étapes optionnelles du même type que les étapes optionnelles décrites pour le procédé de préparation d'un extrait de betterave selon l'invention peut être utilisé (lavage, épierrage, concentration, décoloration, et/ou séchage de l'extrait). Dans certains cas, une étape d'enrichissement en composés de faible poids moléculaire, comme décrit pour le procédé de préparation d'un extrait de betterave selon l'invention peut être utile. Pour d'autres légumes, l'étape d'hydrolyse des pectines à l'aide de pectinases peut, comme pour la betterave, être remplacée par une étape d'hydrolyse des protéines présentes dans le jus ou le broyat. L'utilisation de glutaminase peut tout particulièrement être utile pour favoriser la libération de l'acide glutamique. Par exemple, pour ce qui est de la tomate, l'extrait peut être obtenu par un procédé comprenant une étape classique d'obtention de jus de tomate, une étape d'hydrolyse des protéines, telle que décrite pour la préparation de l'extrait de betterave selon l'invention, et une étape d'enrichissement en composés de faible poids moléculaire, comme décrit pour le procédé de préparation d'un extrait de betterave selon l'invention. Pour l'extrait de carotte, un procédé comprenant une étape classique d'obtention de jus de carotte, une étape d'hydrolyse des pectines et une étape d'enrichissement en composés de faible poids moléculaire, comme décrit pour le procédé de préparation d'un extrait de betterave selon l'invention peut être utilisé. Pour l'extrait d'oignon, le procédé de préparation peut comprendre une étape classique d'obtention de jus d'oignon, une étape d'hydrolyse des pectines, optionnellement une étape d'enrichissement en composés de faible poids moléculaire, comme décrit pour le procédé de préparation d'un extrait de betterave selon l'invention, et optionnellement une étape de cuisson lente de l'extrait en présence de matière grasse.

Par « extrait camé », on entend tout extrait obtenu à partir de viande animale. En particulier, un tel extrait carné peut être un extrait de poulet. Un tel extrait peut être obtenu par une étape éventuelle d'hydrolyse enzymatique d'un mélange de viande de poulet et d'eau ou d'un mélange de carcasses de poulet et d'eau, suivie d'une étape de cuisson, puis une ou plusieurs étapes de filtration ou de décantation pour éliminer les parties solides, optionnellement une étape de clarification, une étape de concentration et optionnellement une étape de séchage.

Les compositions ou kits selon l'invention peuvent de manière optionnelle comprendre dans certains cas d'autres ingrédients que l'extrait de betterave selon l'invention et ledit au moins un autre extrait végétal ou carné. Notamment, les compositions ou kits peuvent entre autres comprendre des épices, huiles essentielles, herbes aromatiques, légumes ou plantes feuillues, du KCl, des nucléotides, des extraits de levure.

La présente invention vise également l'utilisation d'un extrait de betterave ou d'une composition ou d'un kit selon l'invention comme substitut de sel dans une préparation culinaire. En effet, comme indiqué précédemment et comme démontré dans les exemples, l'extrait de betterave selon l'invention, ou une combinaison d'un extrait de betterave selon l'invention avec un autre extrait végétal ou carné dans une composition ou un kit, ont la capacité d'augmenter la saveur salée et permettent donc de réduire la teneur en sel de cuisine d'une préparation culinaire, tout en conservant la saveur salée.

La présente invention vise également l'utilisation d'un extrait de betterave ou d'une composition ou d'un kit selon l'invention comme exhausteur de saveur umami dans une préparation culinaire. En effet, comme indiqué précédemment et comme démontré dans les exemples, l'extrait de betterave selon l'invention, ou une combinaison d'un extrait de betterave selon l'invention avec un autre extrait végétal ou carné dans une composition ou un kit, ont la capacité d'augmenter la saveur umami d'une préparation culinaire.

La présente invention concerne également une préparation culinaire comprenant un extrait de betterave ou une composition ou un kit selon l'invention. Une telle préparation culinaire peut notamment être choisie parmi une soupe, un bouillon, une sauce, un plat préparé ou en conserve, un snack, un fond culinaire, une marinade, un assaisonnement.

Les extraits de betterave, compositions et kits selon l'invention ayant la capacité d'augmenter la saveur salée, une telle préparation culinaire comprend de préférence une teneur réduite en sel de cuisine. Par « teneur réduite en sel de cuisine », on entend, pour une soupe, une teneur en sel de cuisine inférieure ou égale à 0,75 %, avantageusement inférieure ou égale à 0,70 %, inférieure ou égale à 0,65 %, voire inférieure ou égale à 0,6 %, les pourcentages étant exprimés en poids de sel de cuisine par rapport au poids total de la préparation culinaire. Pour tout autre type d'application, la cible est de réduire de 25 % la teneur en sel de cuisine par rapport à la teneur en sel d'un produit prêt à consommer du commerce.

Les extraits de betterave, compositions et kits selon l'invention ayant la capacité d'augmenter la saveur umami, une telle préparation culinaire peut comprendre, en plus de la teneur réduite en sel de cuisine ou en tant qu'alternative à la teneur réduite en sel de cuisine, une teneur réduite en glutamate monosodique. Par « préparation culinaire à teneur réduite en glutamate monosodique », on entend une préparation culinaire exempte de glutamate monosodique ou une préparation culinaire à teneur en glutamate monosodique inférieure ou égale à 0,4 %, les pourcentages étant exprimés en poids de glutamate monosodique par rapport au poids total de la préparation culinaire.

Lorsque les extraits de betterave, compositions ou kits selon l'invention sont utilisés dans des compositions culinaires, ils sont ajoutés à des doses permettant d'obtenir les effets désirés d'augmentation de la saveur salée, la saveur umami et l'intensité aromatique. Avantageusement, ils sont ajoutés à une dose correspondant à 0,3 à 1,5 % en poids de la préparation culinaire (le pourcentage étant calculé en divisant le poids de l'extrait de betterave, de la composition ou du kit ajouté par le poids total de la composition), pour un extrait de betterave, une composition ou un kit ayant un degré Brix d'environ 40. Pour des extraits de betterave, compositions ou kits ayant un degré Brix plus ou moins élevé, les proportions adéquates correspondantes sont calculées de façon proportionnelle.

La présente invention est illustrée par les figures et exemples suivants, qui sont insérés à titre d'illustration uniquement et ne doivent donc pas être considérés comme limitant la portée de la présente invention.

### DESCRIPTION DES FIGURES

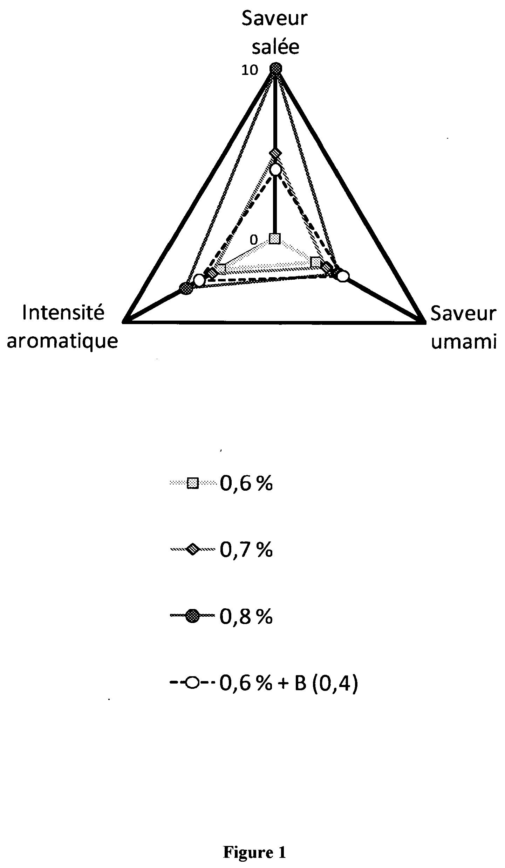

**Figure 1****.** Propriétés organoleptiques d'une soupe à teneur réduite en sel comprenant un extrait de betterave selon l'invention. « 0,8 % » : soupe à 0,8 % en poids de sel de cuisine (soupe conventionnelle ou cible), « 0,7 % » : soupe à 0,7 % en poids de sel de cuisine (soupe à teneur réduite en sel de 12,5 %), « 0,6 % » : soupe à 0,6 % en poids de sel de cuisine (soupe à teneur réduite en sel de 25 %), « 0,6 % + B (0,4) » : soupe à 0,6 % en poids de sel de cuisine et 0,4 % en poids d'extrait de betterave selon l'invention. Un panel d'experts a été chargé de noter la saveur salée, la saveur umami et l'intensité aromatique de différentes soupes suite à une épreuve d'intervalle, consistant à positionner sur une échelle de 0 à 10 les témoins (0,6 % ; 0,7 % ; 0,8 %), puis l'essai (0,6 % + B (0,4)) par comparaison à ces témoins.
   Pour l'évaluation de la saveur salée, les notes des échantillons « 0,6 % », « 0,7 % » et « 0,8 % » ont arbitrairement été fixées à 0, 5 et 10, respectivement, sur l'échelle de notation. Pour l'évaluation de la saveur umami et de l'intensité aromatique, ces 3 échantillons témoins ont librement été positionnés par chaque juge sur l'échelle de 0 (peu umami pour la saveur umami, peu intense pour l'intensité aromatique) à 10 (très umami pour la saveur umami, très intense pour l'intensité aromatique).

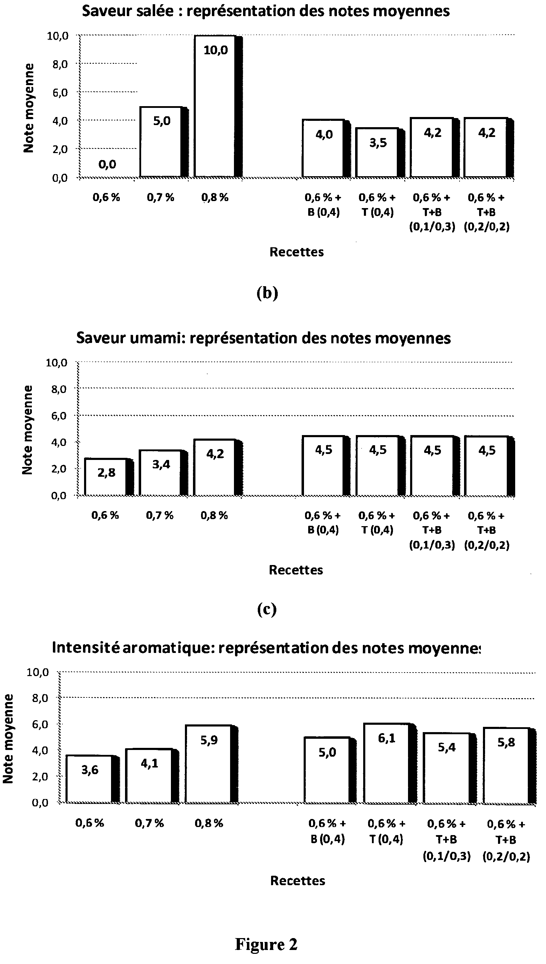

**Figure 2****.** Propriétés organoleptiques d'une soupe à teneur réduite en sel comprenant un extrait de betterave selon l'invention, un extrait de tomate ou deux combinaisons d'un extrait de tomate et de l'extrait de betterave selon l'invention. « 0,8 % » : soupe à 0,8 % en poids de sel de cuisine (soupe conventionnelle ou cible), « 0,7 % » : soupe à 0,7 % en poids de sel de cuisine (soupe à teneur réduite en sel de 12,5 %), « 0,6 % » : soupe à 0,6 % en poids de sel de cuisine (soupe à teneur réduite en sel de 25 %), « 0,6 % + B (0,4) » : soupe à 0,6 % en poids de sel de cuisine et 0,4 % en poids d'extrait de betterave selon l'invention, « 0,6 % + T (0,4) » : soupe à 0,6 % en poids de sel de cuisine et 0,4 % en poids d'un extrait de tomate, « 0,6 % + T+B (0,1/0,3) » : soupe à 0,6 % en poids de sel de cuisine et 0,4 % en poids de composition comprenant l'extrait de betterave (0,3 %) selon l'invention et un extrait de tomate (0,1 %), « 0,6 % + T+B (0,2/0,2) » : soupe à 0,6 % en poids de sel de cuisine et 0,4 % en poids de composition comprenant l'extrait de betterave (0,2 %) selon l'invention et un extrait de tomate (0,2 %). Un panel d'experts a été chargé de noter la saveur salée (a), la saveur umami (b) et l'intensité aromatique (c) de différentes soupes suite à une épreuve d'intervalle, consistant à positionner sur une échelle de 0 à 10 les témoins (0,6 % ; 0,7 % ; 0,8 %), puis les essais (0,6 % + B (0,4); 0,6 % + T (0,4) ; 0,6 % + T+B (0,1/0,3) ; 0,6 % + T+B (0,2/0,2)) par comparaison à ces témoins.
   Pour l'évaluation de la saveur salée, les notes des échantillons « 0,6 % », « 0,7 % » et « 0,8 % » ont arbitrairement été fixées à 0, 5 et 10, respectivement, sur l'échelle de notation. Pour l'évaluation de la saveur umami et de l'intensité aromatique, ces 3 échantillons témoins ont librement été positionnés par chaque juge sur l'échelle de 0 (peu umami pour la saveur umami, peu intense pour l'intensité aromatique) à 10 (très umami pour la saveur umami, très intense pour l'intensité aromatique).

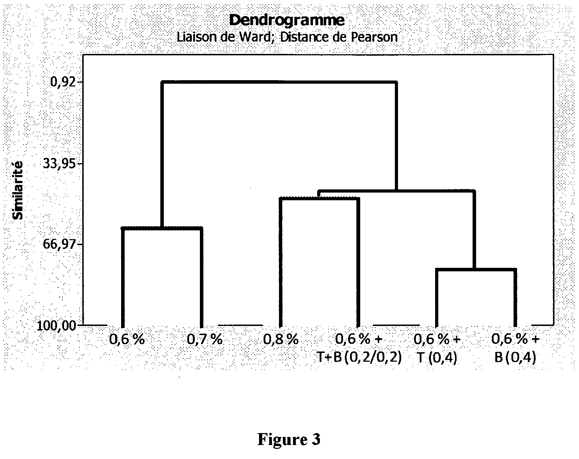

**Figure 3****.** Classification hiérarchique des notes obtenues suite à la dégustation des soupes (légende identique à celle décrite dans la Figure 2).

### EXEMPLES

### EXEMPLE 1. Extrait de betterave selon l'invention

Un extrait de betterave selon l'invention, obtenu par le procédé selon l'invention, a été analysé, aussi bien dans sa composition que dans ses propriétés organoleptiques.

### 1.1. Propriétés analytiques

L'extrait de betterave analysé possède un degré Brix de 41. L'analyse de sa composition a permis d'obtenir les résultats présentés dans le Tableau 1 ci-dessous :

**Tableau 1. Composition analytique d'un extrait de betterave de 41°Brix selon l'invention**

| | |
|---|---|
| **Degré Brix** | 41 |
| **Valeur énergétique (Kcal)** | 66,5 |
| **Matière sèche (étuve de séchage sous vide) (g/100g)** | 38,7 |
| **Protéines (g/100g)** | 7,8 |
| Acide glutamique (g/100g) | 0,61 |
| **Glucides totaux (g/100g)** | 7,9 |
| Glucides assimilables (g/100g) | 7,5 |
| Dont : sucres (g/100g) | 7,5 |
| Glucose (g/100g) | 4,6 |
| Fructose (g/100g) | 1,6 |
| Saccharose (g/100g) | 1,0 |
| Fibres (g/100g) | 0,4 |
| **Lipides totaux (g/100g)** | 0,5 |
| Dont : acides gras saturés (g/100g) | 0,11 |
| Dont : acides gras monoinsaturés (g/100g) | 0,14 |
| Dont : acides gras polyinsaturés (g/100g) | 0,25 |
| Dont : acides gras trans (g/100g) | 0,0 |
| Dont : cholestérol (g/100g) | 0,0 |
| **Acides organiques (g/100g)** | 5,1 |
| **Cendres (matières minérales) (g/100g)** | 15,2 |
| Sodium (mg/100g) | 3850 |
| Calcium (mg/100g) | 8 |
| Fer (mg/100g) | 18,0 |
| Potassium (mg/100g) | 2740,0 |

En outre, l'analyse de la masse moléculaire de l'extrait final (après toutes les étapes) montre que 93 % des composés ont une masse moléculaire inférieure à 500 Da, alors que l'extrait obtenu avant l'étape d'enrichissement en composés de faible masse moléculaire ne comprend que 77 % de composés de masse moléculaire inférieure à 500 Da. Cela représente un enrichissement (augmentation du pourcentage de composés de masse moléculaire inférieure à 500 Da) d'environ 21%. Dans cette expérience, on observe également un enrichissement en composés de masse moléculaire inférieure à 120 Da (voir Tableau 2 ci-dessous).

**Tableau 2. Profil de poids moléculaires caractérisant un extrait de betterave selon l'invention, avant et après l'étape (c) d'enrichissement**

| **Masses moléculaires (MM) (Daltons)** | **% avant l'étape (c)** | **% après l'étape (c)** |
|---|---|---|
| MM > 5000 | 2,83 | 0,08 |
| 5000 > MM > 1000 | 11,59 | 1,90 |
| 1000 > MM > 500 | 8,58 | 4,85 |
| 500 > MM > 120 | 46,52 | 55,70 |
| 120 > MM | 30,48 | 37,47 |
| TOTAL | 100 | 100 |

### 1.2. Propriétés organoleptiques

Le produit sous sa forme concentrée se présente sous la forme d'un liquide odorant (odeur d'épinard, d'artichaut), aromatique (goût très salé, umami, acide, légèrement artichaut/herbes séchées, caramélisé/grillé type seasonning, note extrait de levure, goût viandé), coloré (brun très foncé, opaque). Dilué à 2 %, il présente une couleur caramel, marron-orangé, limpide, une odeur de coeur d'artichaut, d'épinard, légèrement « herbes séchées, foin », et un goût salé, umami, doux, rond. Le produit ne présente pas de faux goût, il est légèrement astringent, pas typé betterave et présente un léger goût artichaut/épinard, assez faible dans l'ensemble.

Une soupe toute prête comprend généralement 0,8 % en poids de sel de cuisine, soit 8 g de sel par kg de soupe. Afin de réduire la teneur en sel de cuisine, les qualités gustatives d'une soupe comprenant 0,6 % en poids de sel de cuisine, soit 6 g de sel par kg de soupe, et 0,4 % en poids d'extrait de betterave selon l'invention, soit 4 g d'extrait de betterave par kg de soupe, ont été comparées à celles de soupes comprenant 0,6 %, 0,7 % et 0,8 % en poids de sel de cuisine par un panel d'experts dans une épreuve d'intervalle.
Le principe du test d'intervalle est le suivant : les juges doivent placer les échantillons sur une échelle. Chaque barreau de l'échelle correspond à une note entre 0 et 10. Des termes expliquant l'amplitude de l'échelle sont ajoutés. Dans une épreuve d'intervalle, des distances égales correspondent à des différences d'intensité perçues égales, quelle que soit la zone de l'échelle considérée. Cette méthode permet d'attribuer une note aux produits. De plus, elle permet de comparer des échantillons testés à des moments différents. Une échelle structurée est utilisée pour rendre plus rapide le traitement des résultats. La signification des barreaux de l'échelle est indiquée sur le questionnaire au moyen d'un chiffre ou de produits. Pour le descripteur « saveur salée », des produits réels servent ici de référence à l'intensité contrôlée (teneur en sodium connue) sur l'échelle, les autres échantillons devant être placés à l'intérieur de cette gamme. Afin d'augmenter la fiabilité du test, un nombre maximal de juges est utilisé (au moins 10).

Les résultats obtenus sont présentés sur la Figure 1. Ceux-ci montrent clairement que la soupe comprenant 0,6 % en poids de sel de cuisine et 0,4 % en poids d'extrait de betterave selon l'invention a une saveur salée proche de celle de la soupe comprenant 0,7 % en poids de sel de cuisine, une saveur umami renforcée, y compris par rapport à la soupe comprenant 0,8 % en poids de sel de cuisine, et possède en outre une intensité aromatique globale proche de la soupe comprenant 0,8 % en poids de sel de cuisine, démontrant ainsi l'intérêt des extraits de betterave selon l'invention pour diminuer la teneur en sel de préparations culinaires, tout en préservant en grande partie la saveur salée et l'intensité aromatique globale.

### EXEMPLE 2. Composition comprenant l'extrait de betterave selon l'invention et un extrait de tomate

### 2.1. Préparation de la composition

Deux compositions comprenant pour l'une 75 % en poids d'extrait de betterave selon l'invention et 25 % en poids d'un extrait de tomate et pour l'autre 50 % en poids d'extrait de betterave selon l'invention et 50 % en poids d'un extrait de tomate ont été préparées. L'extrait de tomate a été obtenu par un procédé similaire à celui utilisé pour l'extrait de betterave, comprenant une étape classique d'obtention de jus de tomate, une étape d'hydrolyse des protéines, et une étape d'enrichissement en composés de faible poids moléculaire.

### 2.2. Propriétés organoleptiques de la composition

Les qualités gustatives de soupes comprenant 0,6 % en poids de sel de cuisine et 0,4 % en poids de l'une ou l'autre des compositions préparées au paragraphe précédent ont été comparées à celles de soupes comprenant 0,6 %, 0,7 % et 0,8 % en poids de sel de cuisine, ainsi qu'à celles de la soupe précédemment testée par un panel d'experts comprenant 0,6 % en poids de sel de cuisine et 0,4 % en poids d'extrait de betterave selon l'invention, et d'une soupe comprenant 0,6 % en poids de sel de cuisine et 0,4 % en poids d'extrait de tomate tel que décrit au paragraphe précédent.

Les résultats obtenus sont présentés sur la Figure 2. Ces résultats montrent que les soupes avec seulement 0,6 % en poids de sel de cuisine comprenant les compositions combinant un extrait de betterave selon l'invention avec un extrait de tomate possèdent une saveur salée légèrement inférieure à celle de la soupe ayant 0,7 % en poids de sel de cuisine, une saveur umami supérieure à la soupe comprenant 0,8 % en poids de sel de cuisine et équivalente à celle des soupes comprenant 0,6 % en poids de sel de cuisine et 0,4 % en poids d'extrait de betterave selon l'invention ou d'extrait de tomate, et une intensité aromatique très proche de celle de la soupe ayant 0,8 % en poids de sel de cuisine. Par ailleurs, le fait de coupler l'utilisation de l'extrait de betterave selon l'invention et l'extrait de tomate permet de donner lieu à une soupe au profil global équilibré, et de gommer d'éventuels défauts liés à l'utilisation d'extraits seuls (légère astringence de l'extrait de betterave, légère acidité de l'extrait de tomate, éventuelles notes métalliques...). L'utilisation combinée des deux extraits permet donc d'obtenir un effet de synergie.

La complémentarité d'effets entre l'extrait de betterave selon l'invention et l'extrait de tomate pourrait notamment s'expliquer par une réaction de combinaison entre l'acide glutamique libre notamment apporté par l'extrait de tomate et du potassium notamment fourni par l'extrait de betterave, pour ainsi former du glutamate de potassium aux propriétés d'exhausteur de goût. Mais plus généralement, c'est vraisemblablement la mise en commun des deux pools de molécules apportées respectivement par l'extrait de betterave selon l'invention et par l'extrait de tomate qui ferait de la composition un produit particulièrement efficace pour compenser une réduction de sel dans les préparations culinaires et pour renforcer le goût de telles préparations culinaires.

En fonction des notes attribuées par les experts pour la saveur salée, la saveur umami et l'intensité aromatique, un dendrogramme (classification hiérarchique) de classification des différentes soupes a été établi, en utilisant la liaison de Ward et la distance de Pearson. Le résultat de cette analyse est représenté sur la Figure 3 et montre que la soupe avec seulement 0,6 % en poids de sel de cuisine comprenant la composition combinant un extrait de betterave selon l'invention avec un extrait de tomate a un profil global comparable à celui de la soupe conventionnelle avec 0,8 % en poids de sel de cuisine, sans pour autant posséder ses inconvénients en termes de teneur en sodium.

### EXEMPLE 3. Utilisation de l'extrait de betterave selon l'invention dans une sauce tomate

Plusieurs sauces tomate avec les mêmes ingrédients dans les mêmes proportions, à l'exception de la quantité de sel de cuisine et d'extrait de betterave selon l'invention (voir Exemple 1), ont été préparées. La composition précise des différentes sauces est indiquée dans le Tableau 3 ci-dessous.

**Tableau 3. Composition des sauces tomate testées**

| INGREDIENT (%) | Recette conventionnelle (cible) | Recette à teneur réduite en sel (- 25 % par rapport à la cible) | Recette à teneur réduite en sel + extrait de betterave ajouté en compensation |
|---|---|---|---|
| Pulpe de tomate | 31,94 | 31,94 | 31,94 |
| Amidon prégélatinisé TEXTAID | 3,19 | 3,19 | 3,19 |
| Sucre en poudre | 0,80 | 0,80 | 0,80 |
| Arôme végétal naturel | 0,16 | 0,16 | 0,16 |
| Arôme olive | 0,02 | 0,02 | 0,02 |
| Thym concassé | 0,01 | 0,01 | 0,01 |
| Sel de cuisine | 0,8 | 0,6 | 0,6 |
| Extrait de betterave selon l'invention | 0 | 0 | 0,6 |
| Eau | 63,08 | 63,28 | 62,68 |
| TOTAL | 100 | 100 | 100 |

Les différentes sauces tomate ont ensuite été testées par un panel d'experts. Les résultats obtenus sont présentés dans le Tableau 4 ci-dessous.

**Tableau 4. Résultats de la comparaison des trois sauces tomate testées par un panel d'experts**

| Paramètre | Recette conventionnelle (cible) | Recette à teneur réduite en sel (- 25 % par rapport à la cible) | Recette à teneur réduite en sel + extrait de betterave ajouté en compensation |
|---|---|---|---|
| Sensation salée (% sel équivalent) | 0,80 | 0,60 | 0,73 |
| Couleur | | | Pas d'impact sur la couleur |
| Odeur | | | Pas d'impact sur l'odeur |
| Goût | | | Intensité aromatique renforcée par rapport à la cible Saveur umami renforcée par rapport à la cible Profil aromatique et aspect inchangés par rapport à la cible |

L'extrait de betterave ajouté à hauteur de 0,6 % (0,6 g de concentré de betterave pour 100 g de sauce) permet de procurer une sensation salée équivalant à celle caractérisant une sauce salée à 0,73 % (0,73 g de sel pour 100 g de sauce). Considérant la saveur salée, l'apport de l'extrait de betterave compense donc ici seulement une partie de la réduction de sel appliquée dans la recette (16,3 % contre les 25 % ciblés). En revanche, le profil aromatique global de la sauce contenant l'extrait reste inchangé par rapport au profil de la sauce avant ajout de l'extrait. Par ailleurs, l'utilisation de l'extrait permet d'augmenter significativement l'intensité aromatique et la saveur umami de la soupe, ce qui amène les experts à considérer l'application contenant l'extrait sensiblement proche de l'application cible.

Afin d'anticiper le procédé de fabrication des applications à l'échelle industrielle, les tests d'analyse sensorielle ont à la fois été menés sur les produits juste après incorporation de l'extrait de betterave et sur les produits traités thermiquement (stérilisation). Les résultats montrent que le traitement thermique n'impacte pas l'efficacité de l'extrait.

### EXEMPLE 4. Exemples d'application de l'extrait de betterave, en association avec d'autres extraits, dans des préparations culinaires

Le Tableau 5 ci-dessous illustre des exemples d'application de compositions contenant l'extrait de betterave. Différents dosages ont été testés ; celui procurant l'effet le plus satisfaisant aux yeux du panel d'experts pour compenser la réduction de sel de 25 % appliquée à la recette traditionnelle apparaît dans le tableau.

**Tableau 5. Exemples d'application de compositions contenant l'extrait de betterave utilisé en association avec d'autres extraits**

| **Application** | **Composition du mélange** | **Dosage du mélange pour un effet optimal** | **Forme** |
|---|---|---|---|
| Haricots blancs | Betterave (98%), tomate (1%), carotte (1%) | 0,8-1 | Concentré |
| Bouillon de poulet | Poulet (97%), tomate (2%), betterave (1%) | 1,1 | Poudre |
| Bouillon de poulet | Poulet (98%), champignon (1%), betterave (1%) | 1 | Poudre |
| Bouillon de poulet | Poulet (98%), tomate (1%), betterave (1%) | 0,08 | Poudre |
| Soupe de légumes | Betterave (98%), carotte (1%), tomate (1%) | 1,5 | Poudre |
| Soupe de légumes | Betterave (98%), tomate (1 %), carotte (1%) | 1 | Poudre |
| Snacks | Betterave (98%), tomate (1%), carotte (1%) | 0,5 à 1,50 | Poudre |
| Snacks | Betterave (98%), carotte (1%), tomate (1%) | 0,5 à 1,50 | Poudre |
| Soupe | Betterave (98%), tomate (1%), carotte (1%) | 1% | Poudre |
| Assaisonnement | Betterave (98%), tomate (1%), carotte (1%) | 0,5 à 1,5% | Poudre |
| Petits pois | Betterave (98%), tomate (1%), carotte (1%) | 0,80% | Concentré |
| Haricots verts | Betterave (98%), tomate (1%), carotte (1%) | 0,80% | Concentré |
| Sauce tomate | Betterave (98%), tomate (1%), carotte (1%) | 0,90% | Poudre |
| Sauce tomate | Tomate (80%), betterave (19%), carotte (1%) | 0,80% | Poudre |
| Soupe de maïs | Betterave (98%), tomate (1%), carotte (1%) | 0,35% | Poudre |
| Soupe de maïs | Tomate (80%), betterave (19%), carotte (1%) | 0,80% | Poudre |

### BIBLIOGRAPHIE

CN101095492A
DD295664A5
DD295191A5
DE4313549C1
GB1459313A
WO 2007/002015
WO 2008097842
WO 2009/116050
WO 2008/122138
WO 2009/114954
WO 2009/152627
WO 2008/040611
WO 2009/104194
WO 2008/078315

## Revendications

1. Procédé de préparation d'un extrait de betterave, comprenant :
(a) l'obtention d'un jus de betterave à partir de tout ou partie de la plante,
(b) une étape d'hydrolyse enzymatique des protéines du jus obtenu à l'étape (a),
(c) une étape d'enrichissement en composés de faible masse moléculaire, inférieure à 5000 Da.

2. Procédé selon la revendication 1, **caractérisé en ce que** la partie de la plante utilisée est choisie parmi le tubercule, la tige, les feuilles, les fleurs ou leurs mélanges.

3. Procédé selon l'une quelconque des revendications 1 et 2, **caractérisé en ce que** l'étape d'hydrolyse est réalisée à l'aide d'au moins une composition enzymatique comprenant une activité exopeptidase, une activité endopeptidase et une activité glutaminase.

4. Procédé selon l'une quelconque des revendications 1 à 3, **caractérisé en ce que** l'étape d'enrichissement est réalisée par microfiltration, ultrafiltration ou nanofiltration.

5. Extrait de betterave susceptible d'être obtenu par le procédé selon l'une quelconque des revendications 1 à 4.

6. Extrait de betterave selon la revendication 5, **caractérisé en ce qu'**il contient :
- Cendres (fraction minérale) : 12 à 15 g pour 100 g d'extrait à 40°Brix environ,
- Sucres totaux (fraction glucidique) : 6 à 10 g pour 100 g d'extrait à 40°Brix environ,
- Protéines (fraction protéique) : 6 à 10 g pour 100 g d'extrait à 40°Brix environ,
- Lipides (fraction lipidique) : 0 à 1,5 g pour 100 g d'extrait à 40°Brix environ,
- Potassium (élément de la fraction minérale) : 1500 à 7000 mg pour 100 g d'extrait à 40°Brix environ,
- Sodium (élément de la fraction minérale) : 2500 à 4500 mg pour 100 g d'extrait à 40°Brix environ,
- Acide glutamique (élément à rapprocher de la fraction protéique) : 0,4 à 0,8 g pour 100 g d'extrait à 40°Brix environ,
et **en ce qu'**au moins 80 % des composés de l'extrait ont une masse moléculaire inférieure à 5000 Da.

7. Extrait sec de betterave, obtenu par séchage de l'extrait selon l'une quelconque des revendications 5 et 6.

8. Composition ou kit comprenant un extrait de betterave selon l'une quelconque des revendications 5 à 7, et au moins un autre extrait végétal ou camé.

9. Composition ou kit selon la revendication 8, **caractérisée en ce que** ledit au moins un autre extrait est un extrait de légume, notamment un extrait de légume choisi parmi un extrait de tomate, de carotte, et d'oignon.

10. Composition ou kit selon la revendication 9, **caractérisée en ce qu'**elle comprend un extrait de betterave selon l'une quelconque des revendications 5 à 7 et un extrait de tomate, et éventuellement un extrait de carotte.

11. Composition ou kit selon la revendication 8, **caractérisée en ce que** ledit au moins un autre extrait est un extrait de poulet.

12. Utilisation d'un extrait de betterave selon l'une quelconque des revendications 5 à 7 ou d'une composition ou d'un kit selon l'une quelconque des revendications 8 à 11 comme substitut de sel dans une préparation culinaire.

13. Utilisation d'un extrait de betterave selon l'une quelconque des revendications 5 à 7 ou d'une composition ou d'un kit selon l'une quelconque des revendications 8 à 11 comme exhausteur de saveur umami dans une préparation culinaire.

14. Préparation culinaire, notamment soupe, sauce, snack ou plat préparé, comprenant un extrait de betterave selon l'une quelconque des revendications 5 à 7 ou une composition ou un kit selon l'une quelconque des revendications 8 à 11.

## Patentansprüche

1. Verfahren zur Herstellung eines Rübenextrakts, das Folgendes umfasst:
(a) Erhalten eines Rübensafts aus der ganzen oder einem Teil der Pflanze,
(b) einen Schritt einer enzymatischen Hydrolyse von Proteinen des im Schritt (a) erhaltenen Safts,
(c) einen Schritt einer Anreicherung von Verbindungen mit niedrigem Molekulargewicht von weniger als 5000 Da.

2. Verfahren nach Anspruch 1, **dadurch gekennzeichnet, dass** der verwendete Teil der Pflanze aus der Knolle, dem Stängel, den Blättern, den Blüten oder deren Gemischen ausgewählt ist.

3. Verfahren nach einem der Ansprüche 1 und 2, **dadurch gekennzeichnet, dass** der Hydrolyseschritt mithilfe mindestens einer enzymatischen Zusammensetzung durchgeführt wird, die eine Exopeptidase-Aktivität, eine Endopeptidase-Aktivität und eine Glutaminase-Aktivität umfasst.

4. Verfahren nach einem der Ansprüche 1 bis 3, **dadurch gekennzeichnet, dass** der Anreicherungsschritt durch Mikrofiltration, Ultrafiltration oder Nanofiltration durchgeführt wird.

5. Rübenextrakt, der durch das Verfahren nach einem der Ansprüche 1 bis 4 erhalten werden kann.

6. Rübenextrakt nach Anspruch 5, **dadurch gekennzeichnet, dass** er Folgendes enthält:
- Asche (mineralische Fraktion): 12 bis 15 g pro 100 g Extrakt mit ungefähr 40 °Brix,
- Gesamtzucker (kohlenhydrathaltige Fraktion): 6 bis 10 g pro 100 g Extrakt mit ungefähr 40 °Brix,
- Proteine (proteinhaltige Fraktion): 6 bis 10 g pro 100 g Extrakt mit ungefähr 40 °Brix,
- Lipide (lipidhaltige Fraktion) : 0 bis 1,5 g pro 100 g Extrakt mit ungefähr 40 °Brix,
- Kalium (Element der mineralischen Fraktion): 1500 bis 7000 mg pro 100 g Extrakt mit ungefähr 40 °Brix,
- Natrium (Element der mineralischen Fraktion): 2500 bis 4500 mg pro 100 g Extrakt mit ungefähr 40 °Brix,
- Glutaminsäure (Element, das der proteinhaltigen Fraktion nahe kommt): 0,4 bis 0,8 g pro 100 g Extrakt mit ungefähr 40 °Brix,
und dass mindestens 80 % der Verbindungen des Extrakts ein Molekulargewicht von weniger als 5000 Da haben.

7. Rübentrockenextrakt, der durch Trocknen des Extrakts nach einem der Ansprüche 5 und 6 erhalten wurde.

8. Zusammensetzung oder Kit, die bzw. das einen Rübenextrakt nach einem der Ansprüche 5 bis 7 und mindestens einen anderen Pflanzen- oder Fleischextrakt umfasst.

9. Zusammensetzung oder Kit nach Anspruch 8, **dadurch gekennzeichnet, dass** der besagte mindestens eine Extrakt ein Gemüseextrakt ist, insbesondere ein Gemüseextrakt, der aus einem Tomatenextrakt, einem Karottenextrakt und einem Zwiebelextrakt ausgewählt ist.

10. Zusammensetzung oder Kit nach Anspruch 9, **dadurch gekennzeichnet, dass** sie oder es einen Rübenextrakt nach einem der Ansprüche 5 bis 7 und einen Tomatenextrakt und gegebenenfalls einen Karottenextrakt umfasst.

11. Zusammensetzung oder Kit nach Anspruch 8, **dadurch gekennzeichnet, dass** der besagte mindestens eine Extrakt ein Hühnerextrakt ist.

12. Verwendung eines Rübenextrakts nach einem der Ansprüche 5 bis 7 oder einer Zusammensetzung oder eines Kits nach einem der Ansprüche 8 bis 11 als Salzersatz in einer kulinarischen Zubereitung.

13. Verwendung eines Rübenextrakts nach einem der Ansprüche 5 bis 7 oder einer Zusammensetzung oder eines Kits nach einem der Ansprüche 8 bis 11 als Umami-Geschmacksverstärker in einer kulinarischen Zubereitung.

14. Kulinarische Zubereitung, insbesondere Suppe, Soße, Snack oder Fertiggericht, die einen Rübenextrakt nach einem der Ansprüche 5 bis 7 oder eine Zusammensetzung oder ein Kit nach einem der Ansprüche 8 bis 11 umfasst.

## Claims

1. Method for preparing a beet extract, comprising:
(a) obtaining of a beet juice from all or a portion of the plant,
(b) a step of enzymatically hydrolysing the proteins of the juice obtained in the step (a),
(c) a step of enriching with low molecular weight compounds, less than 5000 Da.

2. Method according to claim 1, **characterised in that** the portion of the plant used is chosen from the tuber, the stem, the leaves, the flowers or mixtures thereof.

3. Method according to any of claims 1 and 2, **characterised in that** the step of hydrolysing is carried out using at least one enzymatic composition comprising an exopeptidase activity, an endopeptidase activity and a glutaminase activity.

4. Method according to any of claims 1 to 3, **characterised in that** the step of enriching is carried out by microfiltration, ultrafiltration or nanofiltration.

5. Extract of beet obtainable by the method according to any of claims 1 to 4.

6. Extract of beet according to claim 5, **characterised in that** it contains:
- Ash (mineral fraction): 12 to 15 g for 100 g of extract at about 40°Brix,
- Total sugars (glucidic fraction): 6 to 10 g for 100 g of extract at about 40°Brix,
- Proteins (protein fraction): 6 to 10 g for 100 g of extract at about 40°Brix,
- Lipids (lipidic fraction): 0 to 1.5 g for 100 g of extract at about 40°Brix,
- Potassium (element of the mineral fraction): 1500 to 7000 mg for 100 g of extract at about 40°Brix,
- Sodium (element of the mineral fraction): 2500 to 4500 mg for 100 g of extract at about 40°Brix,
- Glutamic acid (element to reconcile with protein fraction) : 0.4 to 0.8 g for 100 g of extract at about 40°Brix,
and **in that** at least 80% of the compounds of the extract have a molecular weight less than 5000 Da.

7. Dry extract of beet, obtained by drying the extract according to any of claims 5 and 6.

8. Composition or kit comprising a beet extract according to any of claims 5 to 7, and at least one other plant or meat extract.

9. Composition or kit according to claim 8, **characterised in that** said at least one other extract is a vegetable extract, in particular a vegetable extract chosen from an extract of tomato, carrot, and onion.

10. Composition or kit according to claim 9, **characterised in that** it comprises a beet extract according to any of claims 5 à 7 and a tomato extract, and optionally a carrot extract.

11. Composition or kit according to claim 8, **characterised in that** said at least one other extract is a chicken extract.

12. Use of a beet extract according to any of claims 5 to 7 or of a composition or of a kit according to any of claims 8 to 11 as a salt substitute in a culinary preparation.

13. Use of a beet extract according to any of claims 5 to 7 or of a composition or of a kit according to any of claims 8 to 11 as a umami savoury flavour enhancer in a culinary preparation.

14. Culinary preparation, in particular soup, sauce, snack or prepared dish, comprising a beet extract according to any of claims 5 to 7 or a composition or a kit according to any of claims 8 to 11.
